# FASCICULE DE BREVET EUROPEEN

(11) **EP 3 367 016 B1**
(45) Date de publication et mention de la délivrance du brevet: **28.01.2026**
(21) Numéro de dépôt: 18305194.5
(22) Date de dépôt: 23.02.2018
(51) Int. Cl.: F24H 4/04, F24H 9/20, F24D 15/04, F24D 19/10, F24F 5/00

(54) **SYSTÈME DE GESTION THERMIQUE D'AIR ET DE PRODUCTION D'EAU CHAUDE SANITAIRE POUR UN LOCAL**
SYSTEM ZUR THERMISCHEN STEUERUNG VON LUFT UND DER SANITÄREN HEISSWASSERPRODUKTION IN EINEM RAUM
THERMAL AIR MANAGEMENT AND DOMESTIC HOT WATER PRODUCTION SYSTEM FOR A ROOM

(30) Priorité: 23.02.2017 FR 1751449
(43) Date de publication de la demande: 29.08.2018
(73) Titulaire: Atlantic Climatisation et Traitement d'Air Industrie, 69330 Meyzieu (FR)
(72) Inventeur: SAISSET, Luc, 38460 VILLEMOIRIEU (FR); FLEURY, Bernard, 85000 LA ROCHE SUR YON (FR)
(74) Mandataire: Plasseraud IP

(56) Documents cités:
- EP-A1- 2 669 605
- EP-A1- 2 837 894
- US-A1- 2014 260 358
- US-A1- 2015 040 841
- US-A1- 2016 109 162

## Description

L'invention concerne les systèmes de gestion thermique d'un local tel qu'un appartement ou une maison individuelle. Plus précisément, l'invention concerne le rafraichissement ou le chauffage de l'air du local et le chauffage d'une eau à usage sanitaire qui sera utilisée dans le même local.

Habituellement, pour fournir une eau chaude sanitaire à un local, par exemple un logement d'habitation, un local commercial ou une chambre d'hôtel, on utilise un chauffe-eau qui peut notamment être un chauffe-eau thermodynamique. Le chauffe-eau thermodynamique comprend un ballon de stockage et un module thermodynamique destiné à chauffer l'eau contenu dans le ballon de stockage. Le module thermodynamique peut être positionné au-dessus du ballon de stockage, on parle alors de chauffe-eau thermodynamique monobloc. Le module thermodynamique peut aussi être disposé à l'extérieur, on parle alors de chauffe-eau thermodynamique à éléments séparés dits « split ».

Par ailleurs, afin de chauffer, en hiver, et de rafraichir, en été, ledit local, on utilise un module de chauffage et de rafraichissement indépendant de la production d'eau chaude sanitaire.

Par ailleurs, le module de chauffage et de rafraichissement, de type air/air comporte une pompe à chaleur comprenant un compresseur située à l'extérieur du local et une unité intérieure. La pompe à chaleur est apte à transférer des calories depuis l'extérieur vers l'intérieur du local de façon à chauffer l'air du local. Alternativement, la pompe à chaleur est également apte à transférer des frigories depuis l'extérieur vers l'intérieur du local de façon à rafraichir l'air du local.

Le ballon de stockage, tout comme l'unité intérieure du module de chauffage et de rafraichissement, sont disposés à l'intérieur du local.

Ainsi équipé, le local comprend le ballon de stockage et l'unité intérieure du module de chauffage et de rafraichissement.

Le chauffe-eau thermodynamique comprend également une pompe à chaleur associée ou non audit ballon de stockage.

US 2015/040841 A1 divulgue un système et un procédé d'amélioration d'un cycle de chauffage de l'eau dans un système HVAC (de l'anglais « heating, ventilation and air-conditioning ») polyvalent.

US 2016/109162 A1 divulgue un appareil à cycle de réfrigération utilisant un fluide frigorigène inflammable.

Généralement, le chauffe-eau thermodynamique et le module de chauffage et de rafraichissement fonctionnent indépendamment l'un par rapport à l'autre
L'installation du chauffe-eau thermodynamique et du module de chauffage et de rafraichissement est donc longue et fastidieuse pour l'opérateur.

Un objectif de l'invention est de fournir un système de gestion thermique d'air et de production d'eau chaude sanitaire facile à installer et économe.

Pour ce faire, on prévoit selon l'invention un système de gestion thermique d'air et de production d'eau chaude sanitaire comprenant les caractéristiques de la revendication 1.

Ainsi, un seul compresseur, porté par l'unité extérieure, fait simultanément/alternativement partie des circuits thermodynamiques du chauffe-eau et du module de chauffage et de rafraichissement.

En outre, comme le compresseur est disposé dans l'unité extérieure au local, le bruit généré par l'unité intérieure au local est diminué.

De plus, comme l'unité extérieure et l'unité intérieure sont en communication fluidique au moyen de deux connexions fluidiques uniques, le système est simple à installer. Ces deux connexions fluidiques uniques peuvent notamment se présenter sous la forme de deux tubes. En outre, comme le chauffe-eau intègre l'organe de répartition, l'encombrement du système est réduit. L'installation du système dans le local est également plus simple car les connexions fluidiques entre le chauffe-eau et l'organe de répartition peuvent être faites en usine.

Par ailleurs, le dispositif de commande est porté par l'unité intérieure. Ainsi, c'est l'unité intérieure qui peut par exemple porter des capteurs de température qui commande l'unité extérieure. Le système en est plus fiable.

Comme l'organe de répartition comprend un volume de stockage d'un fluide circulant entre l'unité extérieure, le chauffe-eau et le module de chauffage et de rafraichissement, le système est plus fiable.

Par ailleurs, comme l'unité extérieure comprend le ventilateur, le détendeur et l'échangeur de chaleur et une vanne quatre voies, l'unité intérieure, débarrassée de ces composants, est donc moins bruyante.

En outre, dans des modes de réalisation préférés de l'invention, on peut éventuellement avoir recours à l'une et/ou à l'autre des dispositions suivantes :
- le chauffe-eau intègre le dispositif de commande ;
- le système comprend deux connexions fluidiques entre l'organe de répartition et le module de chauffage et de rafraichissement ; le système est donc plus simple à installer ;
- chaque connexion fluidique entre l'organe de répartition (38) et le module de chauffage et de rafraichissement (36) est munie d'au moins une vanne trois voies en communication fluidique avec l'unité extérieure, le chauffe-eau et le module de chauffage et de rafraichissement ;
- le système comprend un condenseur enroulé autour du chauffe-eau ; un transfert thermique entre le condenseur et le chauffe-eau est donc efficace.
- le détendeur, le ventilateur et l'échangeur de chaleur sont mutualisés pour le chauffe-eau et le module de chauffage et de rafraîchissement ;

On prévoit également selon l'invention un procédé d'utilisation d'un système tel que précédemment décrit, comprenant une étape durant laquelle une priorité est donnée au chauffage de l'eau chaude sanitaire (29) par rapport à la gestion thermique de l'air du local, de sorte que le module de chauffage et de rafraichissement (36) est maintenu à l'arrêt pendant une chauffe de l'eau chaude sanitaire (29) jusqu'à ce que la température de l'eau chaude sanitaire (29) est égale à une température de consigne.

En outre, le procédé comprend une étape d'activation du module de chauffage et de rafraichissement si un écart entre une température de consigne et une température mesurée est supérieur à un seuil prédéterminé.

On prévoit enfin selon l'invention une installation comprenant un système de gestion thermodynamique tel que précédemment décrit fonctionnant selon un procédé tel que décrit ci-dessus.

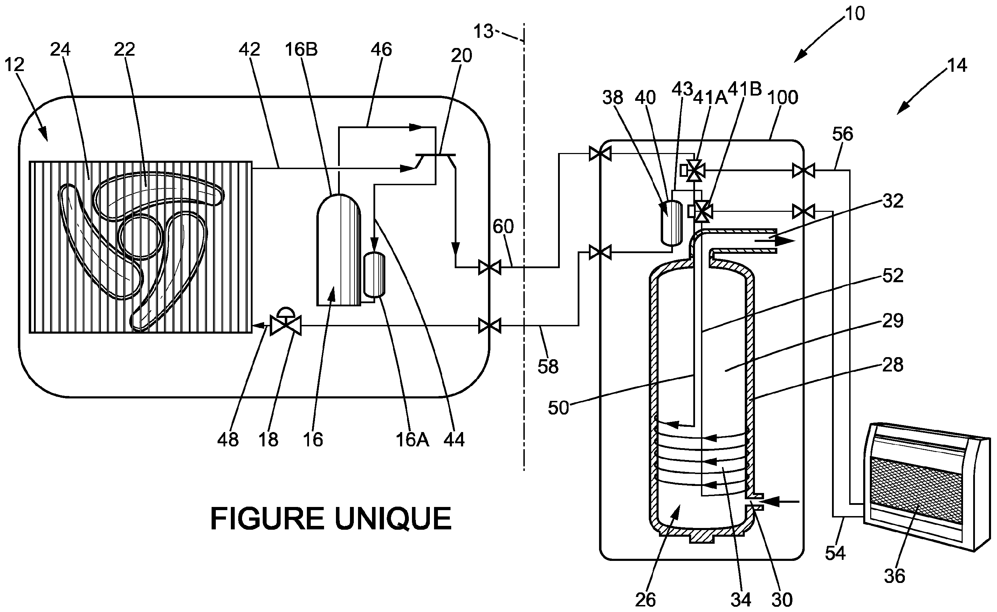

On va maintenant décrire, à titre d'exemple non limitatif, un mode de réalisation de l'invention à l'aide de la figure unique représentant schématiquement un système selon un mode de réalisation de l'invention.

### Installation

On a représenté sur la figure un système 10 de gestion thermique d'air et de production d'eau chaude sanitaire pour un local selon un mode de réalisation de l'invention.

Le système 10 permet de rafraîchir ou de chauffer l'air du local et de fournir à ce local de l'eau chaude sanitaire. On notera que le local peut être de tout type.

Le local peut en particulier être un appartement, une maison individuelle, une chambre d'hôtel ou encore un local commercial.

Le système 10 comprend une unité extérieure 12 et une unité intérieure 14. L'unité extérieure 12 est disposée à l'extérieur du local et l'unité intérieure 14 est disposée dans le local. Par exemple, lorsque le local est un appartement, l'unité intérieure 14 peut être disposée dans une pièce de l'appartement et l'unité extérieure 12 dans un balcon de l'appartement. Sur la figure, on a matérialisé par un trait pointillé 13 une frontière entre l'extérieur et l'intérieur du local.

L'unité extérieure 12 comprend un compresseur 16 qui comprend une entrée de fluide 16A et une sortie de fluide 16B. L'unité extérieure 12 comprend en outre un détendeur 18, une vanne quatre voies 20 et un ventilateur 22 associé à un échangeur de chaleur 24 qui se présente ici sous la forme d'un échangeur de chaleur à ailettes.

L'unité intérieure 14 comprend un chauffe-eau thermodynamique 26. Le chauffe-eau thermodynamique 26 comprend un ballon de stockage 28 d'une masse d'eau 29 destinée à alimenter en eau chaude le local. Le ballon de stockage 28 comprend une entrée 30 d'eau froide et une sortie d'eau 32 d'eau chaude pour le local.

De plus, l'unité intérieure 14 comprend un condenseur 34 qui se présente sous la forme d'un échangeur entourant le ballon de stockage 28 autour de la masse d'eau 29.

Comme visible sur la figure, l'unité intérieure 14 comprend également un module de chauffage et de rafraîchissement 36 de l'air circulant dans le local.

De préférence, le module de chauffage et de rafraîchissement 36 est réversible de façon à pouvoir chauffer ou rafraîchir l'air du local.

L'unité intérieure 14 comprend également un organe de répartition 38 intégré au chauffe-eau thermodynamique 26 et conformé pour répartir un fluide entre le chauffe-eau 26 et le module de chauffage et de rafraîchissement 36. Comme il ressort de la figure, l'organe de répartition 38 et le chauffe-eau thermodynamique 26 sont monobloc, comme schématisé par le cadre 100. Ainsi, l'organe de répartition 38 est disposé sur le ballon de stockage 28 du chauffe-eau 26. En outre, l'organe de répartition 38 comprend un volume de stockage de fluide 40 et deux vannes trois voies 41A, 41B.

On va maintenant décrire des connexions fluidiques entre les éléments décrits ci-dessus. Un fluide qui circule entre et dans ces éléments est appelé fluide de travail.

Dans l'organe de répartition 38, le volume de stockage de fluide 40 est en connexion fluidique avec la vanne trois voies 41B au moyen d'un tube 43.

Dans l'unité extérieure 12, l'échangeur de chaleur 24 est en connexion fluidique avec la vanne quatre voies 20 par l'intermédiaire d'un tube 42. L'entrée de fluide 16A du compresseur 16 est en connexion fluidique avec la vanne quatre voies 20 au moyen d'un tube 44 et la sortie de fluide 16B du compresseur 16 est en connexion fluidique avec la vanne quatre voies 20 par l'intermédiaire d'un tube 46. De plus, le détendeur 18 est en connexion fluidique avec l'échangeur de chaleur 24 par l'intermédiaire d'un tube 48.

Dans l'unité intérieure 14, l'organe de répartition 38 est en connexion fluidique avec le condenseur 34 au moyen de deux tubes 50, 52 de façon à former une boucle entre le condenseur 34 et l'organe de répartition 38.

Plus précisément, le tube 50 est en connexion fluidique avec la vanne trois voies 41A et le tube 52 est connexion fluidique avec la vanne trois voies 41B. De la même façon, l'organe de répartition 38 est en connexion fluidique avec le module de chauffage et de rafraîchissement 36 au moyen de deux tubes 54, 56 de façon à former une boucle entre le module de chauffage et de rafraîchissement 36 et l'organe de répartition 38. En outre, le tube 54 est en connexion fluidique avec la vanne trois voies 41B et le tube 56 est connexion fluidique avec la vanne trois voies 41A.

De plus, l'unité extérieure 12 est en connexion fluidique par l'intermédiaire de deux tubes 58, 60 avec l'unité intérieure 14. Plus précisément, le tube 58 établit une connexion fluidique entre le détendeur 18 et le volume de stockage de fluide 40 de l'organe de répartition 38. Le tube 60 établit une connexion fluidique entre la vanne quatre voies 20 et la vanne trois voies 41A de l'organe de répartition 38.

Ainsi, on notera que le système 10 comprend deux connexions fluidiques uniques de mise en communication fluidique entre l'unité extérieure 12 et l'unité intérieure 14.

Ici, ces deux connexions fluidiques uniques se présentent sous la forme de deux tubes 58, 60. Selon une variante du présent mode de réalisation, au moins l'une des deux connexions fluidiques uniques peut par exemple se présenter sous la forme d'une pluralité de conduits disposés les uns à la suite des autres et associés au moyen de raccords.

De même, on notera que le système 10 comprend deux connexions fluidiques uniques entre l'organe de répartition 38 et le module de chauffage et de rafraîchissement 36.

Ces deux connexions fluidiques se présentent là encore sous la forme de deux tubes 54, 56.

Mais de nouveau, il est possible, sans sortir du cadre de la présente invention, de disposer une pluralité de conduits les uns à la suite des autres pour former les deux connexions fluidiques.

En outre, le système 10 comprend deux connexions fluidiques uniques entre l'organe de répartition 38 et le chauffe-eau thermodynamique 26, qui se présentent sous la forme de deux tubes 50, 52. Le système 10 est donc simple à installer car il comprend peu de connexions fluidiques entre l'unité extérieure 12 et l'unité intérieure 14. Le système 10 comprend ainsi six connexions fluidiques uniques.

De plus, l'organe de répartition 38 et le chauffe-eau thermodynamique 26 sont formés en usine avant l'installation dans le local de sorte que le chauffe-eau 26 intègre l'organe de répartition 38. En conséquence, les tuyaux 50, 52 qui relient les vannes trois voies 41A, 41B et le condenseur 34 sont installés en usine. Un opérateur qui installe le système 10 dans le local doit donc simplement installer les tuyaux 58, 60 qui relient l'unité extérieure 12 et l'unité intérieure 14 et les tuyaux 54, 56 qui relient l'organe de répartition 38, désormais porté par le chauffe-eau thermodynamique 26, et le module de chauffage et de rafraîchissement 36. Le système 10 est donc simple à installer, l'opérateur n'ayant besoin que d'installer quatre connexions fluidiques.

On va maintenant décrire le circuit du fluide de travail dans le système 10 en configuration de chauffage de l'eau chaude sanitaire, de chauffage du local et de rafraichissement du local.

### Chauffage de l'eau chaude sanitaire

En configuration de chauffage de l'eau chaude sanitaire, le fluide de travail parcourt une boucle qui comprend le compresseur 16, l'organe de répartition 38, le condenseur 34, le détendeur 18 et l'échangeur de chaleur 24.

Ainsi, le fluide de travail est comprimé dans le compresseur 16, gagne la vanne quatre voies 20 en circulant dans le tuyau 46, puis circule dans le tuyau 60 pour atteindre la vanne trois voies 41A de l'organe de répartition 38.

Puis, le fluide de travail circule dans le tuyau 50 pour gagner le condenseur 34 où il subit une condensation.

Dans le condenseur, le fluide de travail cède des calories à la masse d'eau 29 contenue dans le ballon de stockage 28 de façon à la chauffer.

Ensuite, le fluide de travail circule dans le tuyau 52 vers la vanne trois voies 41B puis vers le détendeur 18, où le fluide de travail subit une détente, en circulant dans les tuyaux 43 et 58.

Le fluide de travail gagne l'échangeur de chaleur 24 associé au ventilateur 22 où il subit une évaporation, en circulant dans le tuyau 48.

Puis, le fluide de travail circule dans le tuyau 42 pour gagner la vanne quatre voies 20 d'où il est orienté vers l'entrée de fluide 16A du compresseur 16.

### Chauffage de l'air

En configuration de chauffage de l'air circulant dans le local, le fluide de travail parcourt une boucle qui comprend le compresseur 16, l'organe de répartition 38, le module de chauffage et de rafraîchissement 36, le détendeur 18 et l'échangeur de chaleur 24.

De façon relativement similaire à ce qui est décrit ci-dessus, le fluide de travail est comprimé dans le compresseur 16, gagne la vanne quatre voies 20 en circulant dans le tuyau 46, puis circule dans le tuyau 60 pour atteindre la vanne trois vois 41A de l'organe de répartition 38.

Puis, le fluide de travail circule dans le tuyau 56 pour gagner le module de chauffage et de rafraîchissement 36 où le fluide de travail subit une condensation.

A cette occasion, le fluide de travail cède des calories à l'air ambiant du local de façon à le chauffer.

Ensuite, le fluide de travail circule dans le tuyau 54 vers la vanne trois voies 41B puis vers le détendeur 18, où le fluide de travail subit une détente, en circulant dans les tuyaux 43 et 58.

Le fluide de travail gagne l'échangeur de chaleur 24 associé au ventilateur 22 où il subit une évaporation, en circulant dans le tuyau 48.

Puis, le fluide de travail circule dans le tuyau 42 pour gagner la vanne quatre voies 20 d'où il est orienté vers l'entrée de fluide 16A du compresseur 16.

Ainsi, dans les deux configurations décrites ci-dessus, l'échangeur de chaleur 24 remplit la fonction d'un évaporateur.

### Rafraichissement de l'air

En configuration de rafraichissement de l'air circulant dans le local, le fluide de travail parcourt une boucle qui comprend le compresseur 16, l'échangeur de chaleur 24, le détendeur 18, l'organe de répartition 38 et le module de chauffage et de rafraîchissement 36.

Le fluide de travail est comprimé dans le compresseur 16. Puis, le fluide de travail circule dans le tuyau 46 pour gagner la vanne quatre voies 20 d'où il est orienté, en circulant dans le tuyau 42, vers l'échangeur de chaleur 24 où il subit une condensation. A cette occasion, il cède des calories à l'air ambiant extérieur au local. Ensuite, le fluide de travail circule dans le tuyau 48 pour gagner le détendeur 18. Le fluide de travail est détendu dans le détendeur 18, gagne la vanne trois voies 41B de l'organe de répartition 38 en circulant dans le tuyau 58, puis circule dans le tuyau 54 pour atteindre le module de chauffage et de rafraîchissement 36 où il subit une évaporation. A cette occasion, le fluide de travail gagne des calories de l'air ambiant du local de façon à le rafraichir. Ensuite, le fluide de travail circule dans le tuyau 56 vers la vanne trois voies 41A d'où il part vers la vanne quatre voies 20, en circulant dans le tuyau 44. Enfin, le fluide de travail gagne l'entrée de fluide 16A du compresseur 16.

Ainsi, dans la configuration décrite ci-dessus, l'échangeur de chaleur 24 remplit la fonction d'un condenseur.

De plus, comme on le constate, c'est l'organe de répartition 38, au moyen des vannes trois voies 41A, 41B qui répartit le fluide de travail entre le module de chauffage et de rafraîchissement 36 et le chauffe-eau thermodynamique 26 selon la configuration souhaitée du système 10. Dans l'unité extérieure 12, c'est la vanne quatre voies 20 qui permet de répartir le fluide entre le compresseur 16, l'échangeur de chaleur 24 et l'unité intérieure 12.

De plus, on notera que le volume de stockage de fluide 40 permet d'accroître la sécurité du système 10. Il permet d'accueillir et de stocker une portion du fluide de travail en cas de besoin.

On notera par ailleurs que l'unité intérieure 14 comprend un dispositif de commande qui est configuré de sorte que l'unité intérieure 14 asservit l'unité extérieure 12.

Ainsi, c'est l'unité intérieure 14 qui commande l'unité extérieure 12 en fonction du besoin du local.

En outre, l'unité intérieure 14 comprend un premier thermomètre afin de déterminer une température de l'air intérieur du local, un second thermomètre pour déterminer une température de la masse d'eau 29 contenue dans le ballon de stockage 28. Le dispositif de commande est relié aux premier et second thermomètres.

### Procédé d'utilisation

On va maintenant décrire un procédé d'utilisation du système 10.

Selon ce procédé, la fonction de chauffage de la masse d'eau 29 contenue dans le ballon de stockage 28 du chauffe-eau 26 est prioritaire par rapport à la fonction de chauffage ou de rafraichissement de l'air circulant dans le local.

Le procédé d'utilisation du système 10 comprend une étape de mise en route par mise en fonctionnement du chauffe-eau 26.

Ainsi, le système 10 est dans la configuration de chauffage de la masse d'eau 29 comme précédemment décrit.

Lors de cette étape, le module de chauffage et de rafraîchissement 36 est maintenu à l'arrêt.

Durant cette étape, le dispositif de commande détermine la température de la masse d'eau 29, mesurée par le second thermomètre et la compare à une première température de consigne.

Tant que la température mesurée est inférieure à la première température de consigne, le dispositif de commande commande au système 10 de continuer à chauffer la masse d'eau 29.

Si la température mesurée est égale la température de consigne, le dispositif de commande commande au système 10 de mettre fin à la chauffe de la masse d'eau 29. Dans ce cas, le procédé comprend alors une étape d'activation du module de chauffage et de rafraîchissement 36.

Le dispositif de commande compare la température du local, mesurée par le premier thermomètre, à une seconde température de consigne.

Si la température mesurée est supérieure à la température de consigne au-delà d'un premier seuil prédéterminé, le dispositif de commande commande au système 10 de rafraichir l'air ambiant du local. Si la température consigne est supérieure à la température mesurée au-delà d'un second seuil prédéterminé, le dispositif de commande commande au système 10 de chauffer l'air ambiant du local. Bien entendu, les premier et second seuils prédéterminés peuvent être égaux. Les deux seuils peuvent aussi être nuls.

En outre, le système 10 peut aussi comprendre une interface de commande qui est en communication avec le dispositif de commande pour permettre à un utilisateur de définir les première et seconde températures de consigne ou encore d'inverser la priorité entre la mise en fonctionnement du chauffe-eau thermodynamique 26 et le module de chauffage et de rafraîchissement 36.

Cette interface de commande peut être de tout type et notamment comprendre une télécommande en communication avec le dispositif de commande. Le dispositif de commande peut être intégré au chauffe-eau thermodynamique 26.

Bien entendu, on pourra apporter à l'invention de nombreuses variantes sans sortir de son cadre tel que défini dans les revendications.

Le condenseur 34 peut être de tout type et notamment être disposé autour du ballon de stockage 28.

Le système 10 peut commander simultanément la chauffe de la masse d'eau 29 contenue dans le ballon de stockage 28 et la chauffe de l'air du local par le module de chauffage et de rafraîchissement 36.

Notamment en été, le système 10 peut utiliser les calories de l'air ambiant récupérées par le fluide de travail lors du rafraichissement de l'air ambiant du local pour chauffer la masse d'eau 29.

## Revendications

1. Système (10) de gestion thermique d'air et de production d'eau chaude sanitaire (29) pour un local, le système comprenant une unité extérieure (12) au local qui comprend un compresseur (16) configuré pour comprimer un fluide de travail, et une unité intérieure (14) conformée pour être disposée dans le local, l'unité intérieure (14) du local comprenant :
- un chauffe-eau (26) pour alimenter le local en eau chaude sanitaire (29),
- un module de chauffage et de rafraichissement (36) d'un air destiné à circuler dans le local,
- un organe de répartition (38) du fluide de travail entre le chauffe-eau (26) et le module de chauffage et de rafraichissement (36), le chauffe-eau (26) intégrant l'organe de répartition (38),
- deux connexions fluidiques uniques (58, 60) de mise en communication fluidique, pour le fluide de travail, de ladite unité intérieure (14) du local avec ladite unité extérieure (12) du local, et
- un dispositif de commande du système (10) configuré de sorte que l'unité intérieure (14) asservit l'unité extérieure (12),
l'unité extérieure (12) comprenant le compresseur (16), un ventilateur (22), un détendeur (18), un échangeur de chaleur (24) et une vanne 4 voies (20),
le système étant **caractérisé en ce que** l'organe de répartition (38) comprend un volume de stockage (40) du fluide de travail circulant entre l'unité extérieure (12), le chauffe-eau (26) et le module de chauffage et de rafraîchissement (36).

2. Système (10) selon la revendication précédente, dans lequel le chauffe-eau (26) intègre le dispositif de commande.

3. Système (10) selon l'une quelconque des revendications précédentes, comprenant deux connexions fluidiques (54, 56) entre l'organe de répartition (38) et le module de chauffage et de rafraichissement (36).

4. Système (10) selon la revendication précédente, dans lequel chaque connexion fluidique (54, 56) entre l'organe de répartition (38) et le module de chauffage et de rafraichissement (36) est munie d'au moins une vanne trois voies (41A, 41B) en communication fluidique avec l'unité extérieure (12), le chauffe-eau (26) et le module de chauffage et de rafraichissement (36).

5. Système (10) selon l'une quelconque des revendications précédentes, comprenant un condenseur (34) enroulé autour du chauffe-eau (26).

6. Procédé d'utilisation d'un système (10) selon l'une quelconque des revendications précédentes, comprenant une étape durant laquelle une priorité est donnée au chauffage de l'eau chaude sanitaire (29) par rapport à la gestion thermique de l'air du local, de sorte que le module de chauffage et de rafraichissement (36) est maintenu à l'arrêt pendant une chauffe de l'eau chaude sanitaire (29) jusqu'à ce que la température de l'eau chaude sanitaire (29) est égale à une température de consigne.

7. Procédé selon la revendication précédente, comprenant une étape d'activation du module de chauffage et de rafraichissement (36) si un écart entre une température de consigne et une température mesurée est supérieur à un seuil prédéterminé.

## Patentansprüche

1. System (10) zur thermischen Regulierung von Luft und zur Erzeugung von sanitärem Heißwasser (29) für einen Raum, wobei das System eine externe Einheit (12) des Raums, welche einen Kompressor (16) umfasst, welcher dazu eingerichtet ist, ein Arbeitsfluid zu komprimieren, und eine interne Einheit (14) umfasst, welche dazu ausgebildet ist, in dem Raum angeordnet zu sein, wobei die interne Einheit (14) des Raums umfasst:
- einen Wassererhitzer (26) zum Versorgen des Raums mit sanitärem Heißwasser (29),
- ein Modul zum Heizen und Kühlen (36) von Luft, welche dazu vorgesehen ist, in dem Raum zu zirkulieren,
- ein Verteilungselement (38) für Arbeitsfluid zwischen dem Wassererhitzer (26) und dem Modul zum Heizen und Kühlen (36), wobei der Wassererhitzer (26) das Verteilungselement (38) integriert,
- zwei einzelne Fluidverbindungen (58, 60) für das Arbeitsfluid zum Versetzen der internen Einheit (14) des Raums in Fluidkommunikation mit der externen Einheit (12) des Raums, und
- eine System-Steuervorrichtung (10), welche derart eingerichtet ist, dass die interne Einheit (14) die externe Einheit (12) steuert,
wobei die externe Einheit (12) den Kompressor (16), einen Lüfter (22), ein Expansionsventil (18) einen Wärmetauscher (24) und ein 4-Wege-Ventil (20) umfasst,
wobei das System **dadurch gekennzeichnet ist, dass** das Verteilungselement (38) ein Speichervolumen (40) für das Arbeitsfluid umfasst, welches zwischen der externen Einheit (12), dem Wassererhitzer (26) und dem Modul zum Heizen und Kühlen (36) zirkuliert.

2. System (10) nach dem vorhergehenden Anspruch, wobei der Wassererhitzer (26) die Steuervorrichtung integriert.

3. System (10) nach einem der vorhergehenden Ansprüche, umfassend zwei Fluidverbindungen (54, 56) zwischen dem Verteilungselement (38) und dem Modul zum Heizen und Kühlen (36).

4. System (10) nach dem vorhergehenden Anspruch, wobei jede Fluidverbindung (54, 56) zwischen dem Verteilungselement (38) und dem Modul zum Heizen und Kühlen (36) mit wenigstens einem Dreiwege-Ventil (41A, 41B) in Fluidkommunikation mit der externen Einheit (12), dem Wassererhitzer (26) und dem Modul zum Heizen und Kühlen (36) bereitgestellt ist.

5. System (10) nach einem der vorhergehenden Ansprüche, umfassend einen Kondensator (34), welcher um den Wassererhitzer (26) gewickelt ist.

6. Verfahren zur Verwendung eines Systems (10) nach einem der vorhergehenden Ansprüche, umfassend einen Schritt, während welchem eine Priorität dem Erhitzen von sanitärem Heißwasser (29) bezüglich der thermischen Regulierung von Luft des Raums gegeben wird, so dass das Modul zum Heizen und Kühlen (36) während eines Heizens des sanitären Heißwassers (29) angehalten wird, bis die Temperatur des sanitären Heißwassers (29) gleich einer Solltemperatur ist.

7. Verfahren nach dem vorhergehenden Anspruch, umfassend einen Schritt eines Aktivierens des Moduls zum Heizen und Kühlen (36), wenn eine Differenz zwischen einer Solltemperatur und einer gemessenen Temperatur größer als ein vorbestimmter Schwellenwert ist.

## Claims

1. Thermal air management (10) and domestic hot water production (29) system for a room, the system comprising an outdoor unit (12) outside of the room that comprises a compressor (16) configured to compress a working fluid, and an indoor unit (14) designed to be disposed in the room, the indoor unit (14) of the room comprising:
- a water heater (26) for supplying the room with domestic hot water (29),
- a module for heating and cooling (36) air intended to circulate in the room,
- a distribution member (38) for distributing the working fluid between the water heater (26) and the heating and cooling module (36), the water heater (26) integrating the distribution member (38),
- two single fluid connections (58, 60) for fluidic communication, for the working fluid, between said indoor unit (14) of the room and said outdoor unit (12) of the room, and
- a device for controlling the system (10) configured such that the indoor unit (14) controls the outdoor unit (12), the outdoor unit (12) comprising the compressor (16), a fan (22), an expansion valve (18), a heat exchanger (24), and a 4-way valve (20), the system being **characterised in that** the distribution member (38) comprises a storage volume (40) for the working fluid circulating between the outdoor unit (12), the water heater (26), and the heating and cooling module (36).

2. System (10) according to the preceding claim, wherein the water heater (26) integrates the control device.

3. System (10) according to any one of the preceding claims, comprising two fluid connections (54, 56) between the distribution member (38) and the heating and cooling module (36).

4. System (10) according to the preceding claim, wherein each fluid connection (54, 56) between the distribution member (38) and the heating and cooling module (36) is equipped with at least one three-way valve (41A, 41B) in fluidic communication with the outdoor unit (12), the water heater (26), and the heating and cooling module (36).

5. System (10) according to any one of the preceding claims, comprising a condenser (34) wrapped around the water heater (26).

6. Method for using a system (10) according to any one of the preceding claims, comprising a step during which priority is given to heating the domestic hot water (29) over the thermal management of the air of the room, such that the heating and cooling module (36) is maintained stopped during the heating of the domestic hot water (29) until the temperature of the domestic hot water (29) is equal to a setpoint temperature.

7. Method according to the preceding claim, comprising a step of activating the heating and cooling module (36) if a difference between a setpoint temperature and a measured temperature is greater than a predetermined threshold.
